Europäisches Patentamt

European Patent Office

Office européen des brevets

(11) Publication number: **0 435 091 A2**

# EUROPEAN PATENT APPLICATION

(21) Application number: **90124103.4**

(22) Date of filing: **13.12.90**

(51) Int. Cl.5: **B29C 45/73, B29C 45/14, B29C 45/00**

(30) Priority: **26.12.89 US 457223**

(43) Date of publication of application:
**03.07.91 Bulletin 91/27**

(84) Designated Contracting States:
**DE FR GB IT**

(71) Applicant: **MOTOROLA INC.**
**1303 East Algonquin Road**
**Schaumburg Illinois 60196(US)**

(72) Inventor: **Baird, John**
**6427 E Gold Dust Avenue**
**Scottsdale, Arizona 85253(US)**

(74) Representative: **Ibbotson, Harold et al**
**MOTOROLA European Intellectual Property**
**Operations Jays Close Viables Ind. Estate**
**Basingstoke Hants RG22 4PD(GB)**

(54) Isothermal injection molding process.

(57) An isothermal injection molding process includes providing an injection molding apparatus (10) having at least one molding cavity and heating the cavity to a temperature greater than the heat deflection temperature of the molding material (32) to be employed. Molten molding material (32) is then injected into the mold cavity and once injected, cooled to a temperature less than or equal to the heat deflection temperature of the molding materials (32) so that the molded parts may be removed from the apparatus (10).

EP 0 435 091 A2

## ISOTHERMAL INJECTION MOLDING PROCESS

Background of the Invention

This invention relates, in general, to an injection molding process and more particularly to an isothermal injection molding process employing thermoplastics to encapsulate semiconductor devices.

A current trend in the encapsulation of semiconductor devices is to employ thermoplastics in conjunction with injection molding. Typically, a raw engineering material such as a polyaromatic is held at melt temperature and then injected into a mold at high speed. For relatively large packages, the raw plastic may be injected into the mold at pressures upwards of 40,000 psi. For smaller packages, the pressure is somewhat less.

Because the injection molding apparatus is typically heated only up to the nozzle that actually injects the raw plastic into the mold, many problems occur when the raw molten plastic initially encounters the "cold" mold. For example, when the raw molten plastic encounters the mold, fibrils typically form. Fibrils are essentially strings of plastic that form at a temperature higher than the temperature at which the matrix material forms in plastics having a low heat of fusion. When the semi-solid fibrils are injected into the mold, they commonly sweep the fine wires connecting the circuit elements and have even been known to bend die flags. This is especially prevalent in molding smaller packages.

Another problem inherent with the use of "cold" molds is the formation of cold laps. Cold laps occur when parts of the package solidify before the entire mold cavity is filled. These cold laps are much weaker than the rest of the package of structural discontinuity and also because because no fibrils form across them in some materials. This makes for an inherently weak and unreliable package that fails to meet structural and hermiticity requirements. In view of the above, it would be highly desirable to have an isothermal injection molding process that allows for entire plastic encapsulations to cure simultaneously and without damaging electrical components so that better and more reliable packages may be fabricated.

Summary of the Invention

Accordingly, it is an object of the present invention to provide an isothermal injection molding process that may be employed in conjunction with thermoplastics wherein all the molding material cures substantially simultaneously and in which damage to portions of electronic devices during encapsulation is reduced.

The invention provides an injection molding apparatus having at least one molding cavity, which is heated to a temperature greater than the heat deflection temperature of the molding material to be employed; molten molding material is injected therein and after the cavity has been filled, it is cooled to temperature less than or equal to the heat deflection temperature of the molding material and the encapsulated part is then removed.

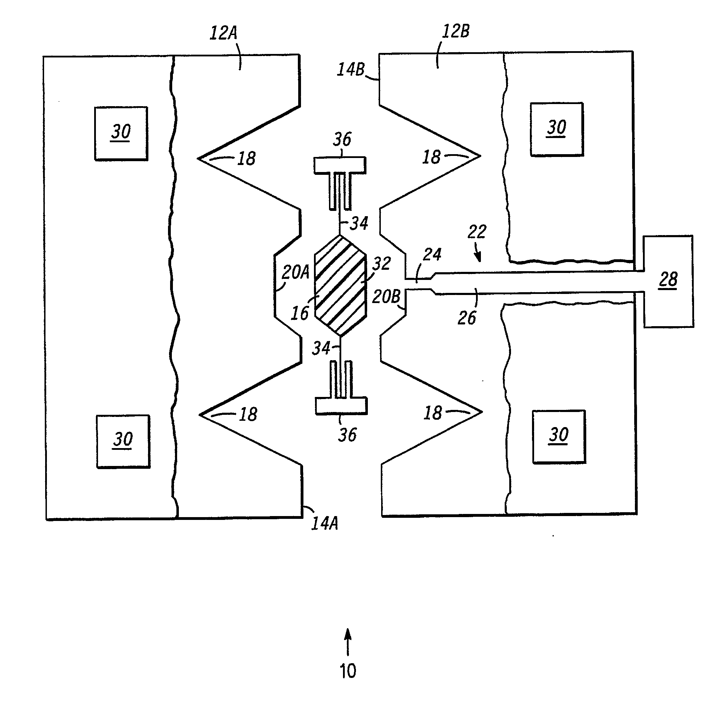

Brief Description of the Drawing

The single figure illustrates a cross-sectional view of a portion of an injection molding apparatus being partially cut-away to show inner features thereof.

Detailed Description of the Invention

The single figure illustrates a cross-sectional view of a portion of an injection molding apparatus 10 being partially cut-away to show inner features thereof. As show herein, injection molding apparatus 10 shows only a single molding chamber although one of skill in the art will understand that an injection molding apparatus may have multiple connected or unconnected chambers. Injection molding apparatus 10 includes mold plates 12A and 12B having oppositely facing mold faces 14A and 14B which are shown in an open position. Faces 14 are machined to exact tolerances so that precision molded parts such as the semiconductor device 16 shown in this embodiment may be manufactured.

Oppositely facing mold faces 14A and 14B include machined areas 18. When mold plates 12A and 12B are closed for the actual molding process, machined areas 18 may form air ducts through which the injection molding apparatus may be heated or cooled. Oppositely facing mold faces 14A and 14B also include machined mold areas 20A and 20B. Again, when mold plates 12A and 12B are closed for molding, machined mold areas 20A and 20B will form a mold cavity.

Machined mold area 20B is connected to molding compound injection means 22. Molding compound injection means 22 includes a gate 24 which feeds molding compound directly into the mold cavity and runner 26 which feeds molding compound into gate 24. In this embodiment, gate 24 is of a lesser width than runner 26. This allows for molding compound to be injected into the mold cavity at a higher pressure than need be applied to molding compound in runner 26. Runner 26 is contiguous to manifold 28 which essentially serves as storage and distributing means for molding compound. One of skill in the art should understand that in an injection molding apparatus having multiple mold cavities, one manifold 28 may service a plurality of mold cavities being connected by a plurality of runners 26.

Typically, manifold 28 is heated so that the molding compound is stored therein in a molten state. Prior art injection molding processes include then injecting the molten molding compound from manifold 28 into a "cold" mold. Because the molding compound begins to solidify once it leaves heated manifold 28 and enters runner 26, many problems occur that prohibit adequate molding. For example, fibrils forming in the runner and gate form blockages and do not allow the complete filling of the mold cavity. To overcome this problem, many large packages are molded by injecting the molding compound under extreme pressures, some upwards of 40,000 psi so that the molding compound will properly fill the mold cavity before it solidifies. However, high pressure molding causes many problems with electronic devices, such as wire sweep and the deformation of the lead frame flag. These problems are especially prevalent in relatively small devices.

The crux of the present invention is to heat at least the mold cavity of the injection molding apparatus so that molten molding compound may flow directly from manifold 28 into the mold cavity without any solidification. In this embodiment, heating the mold cavity is accomplished by the disposition of heaters 30 around the outer perimeter of injection molding apparatus 10. One of skill in the art will understand that many types of heaters well known in the art may be employed for this purpose. As shown, heaters 30 not only heat the mold cavity, but also runner 26 and gate 24. The heating of the entire molding compound flow path enables even better injection of the molding compound into the mold cavity.

By heating the entire flow path of the molding compound, greatly reduced injection pressures may be employed. The use of lower injection pressures and a heated molding compound flow path results in successful injection molding especially for relatively small semiconductor devices such as the SOT 23 wherein the mold cavity is approximately 1/10 of an inch thick while being 3/16 of an inch long. For this type of device, successful molding may occur with injection pressures of less than 1000 psi.

In this process, the heating of the molding compound must be at least to a temperature greater than the heat deflection temperature of the molding compound. The heat deflection temperature is the temperature where the molding compound is semi-molten but will maintain a molded shape at low stress. Preferably, the molding compound is heated to its melting temperature. Although many thermoplastic engineering materials may be employed, a preferred polyaromatic material has a melting temperature of approximately 326 degrees centigrade and a heat deflection temperature of approximately 260 degrees centigrade. The glass transition temperature of this same polyaromatic material where the change of the structural arrangement of molecules actually occurs is approximately 220 degrees centigrade.

Once the parts have been molded, injection molding apparatus 10 must be cooled to a temperature less than or equal to the heat deflection temperature of the molding material so that the parts may be removed from the mold. Cooling may occur by either letting the injection molding apparatus sit at room temperature or applying cooling means to the injection molding apparatus. Cooling means may include the employment of air or any suitable gas injected into or about the mold cavity such as through the air ducts formed by machined areas 18. Further, it is possible to employ a liquid to cool injection molding apparatus 10. One of skill in the art will understand how various cooling means may be employed.

As shown herein, encapsulated semiconductor device 16 has been formed in the mold cavity. Once injection molding apparatus 10 has been cooled, device 16 is removed. Device 16 includes an encapsulation 32 from which a plurality of leads 34 extend. Leads 34 serve as external contacts to the actual semiconductor chip disposed inside encapsulation 32. In the Figure, device 16 is held in place by the insertion of leads 34 into strip tracks 36 although many other apparati or methods of holding device 16 may be employed. These apparati and methods will be apparent to one skilled in the art.

## Claims

1. An isothermal injection molding process comprising the steps of:
   providing an injection molding apparatus (10) having at least one molding cavity; the invention being characterized by:
   heating said at least one molding cavity to a temperature greater than the heat deflection temperature of a molding material (32) to be employed;
   injecting molten molding material (32) into said at least one molding cavity; and
   cooling said at least one molding cavity to a temperature less than or equal to the heat deflection temperature of said molding material (32).

2. The process of claim 1 wherein the providing step includes providing an injection molding apparatus (10) comprising:
a manifold (28) to contain molten molding material (32); and
at least one runner (26) for distributing said molten molding material (32) from said manifold (28) to the at least one molding cavity.

3. The process of claim 2 wherein the heating step includes heating the entire molding material flow path of the injection molding apparatus (10).

4. The process of claim 1 wherein the heating step includes heating the at least one molding cavity to approximately the melting temperature of the molding material (32).

5. The process of claim 4 wherein the injecting step includes injecting molten molding material (32) at a pressure of less than 1000 psi.

6. The process of claim 5 wherein the injecting step includes injecting a thermoplastic molding material (32).

7. The process of claim 6 wherein the injecting step includes injecting a polyaromatic molding material (32).

8. The process of claim 1 wherein the cooling step includes cooling the at least one molding cavity with one of the group comprising a gas and a liquid.

9. An isothermal injection molding process for encapsulating semiconductor devices (16) comprising the steps of:
providing an injection molding apparatus (10) having a manifold (28) and a plurality of molding cavities connected to each other and said manifold by a plurality of runners (26);
heating said injection molding apparatus to a temperature greater than the heat deflection temperature of a molding material (32) to be employed;
injecting molten thermoplastic molding material (32) into said plurality of molding cavities; and
cooling said injection molding apparatus (10) to a temperature less than or equal to the heat deflection temperature of said molding material (32).

10. A process of encapsulating semiconductor devices (16) comprising the steps of:
providing an injection molding apparatus (10) having a manifold (28) and a plurality of molding cavities connected to each other and said manifold (28) by a plurality of runners (26);
placing unencapsulated semiconductor devices (16) in said plurality of molding cavities;
heating said injection molding apparatus (10) to approximately the melting temperature of an encapsulating material (32) to be employed;
injecting molten thermoplastic encapsulating material (32) into said plurality of molding cavities at a pressure of less than 1000 psi; and
cooling said injection molding apparatus (10) to a temperature less than or equal to the heat deflection temperature of said encapsulating material (32).